# EUROPÄISCHE PATENTANMELDUNG

(11) **EP 1 679 465 A2**
(43) Veröffentlichungstag der Anmeldung: **12.07.2006**
(21) Anmeldenummer: 05027298.8
(22) Anmeldetag: 14.12.2005
(51) Int. Cl.: F16L 47/32

(54) **Flüssigkeitsverteiler**

(30) Priorität: 06.01.2005 DE 202005000143 U
(71) Anmelder: Oase GmbH, 48477 Hörstel-Riesenbeck (DE)
(72) Erfinder: Bülter, Christoph, 48477 Hörstel-Bevergern (DE)
(74) Vertreter: Busse & Busse Patentanwälte

(57) **Zusammenfassung**

Ein Flüssigkeitsverteiler mit einer Einströmöffnung (10) und wenigstens zwei Ausströmöffnungen (15) ist dadurch gekennzeichnet, daß er einen Grundkörper (4) mit einem Eingang (6) und wenigstens einem ersten und einem zweiten Ausgang (8) aufweist, wobei wenigstens einer der Ausgänge (8) mit einem eine veränderbare Lage zum Grundkörper (4) einnehmenden Abzweigstück (14) verbunden ist und das Abzweigstück (14) eine der Ausströmöffnungen (15) aufweist. Vorzugsweise ist das Abzweigstück (14) lösbar mit dem Grundkörper (4) verbunden und der Ausgang (8) bei abgenommenem Abzweigstück (14) mit einem Verschlußelement (16) verschließbar. Bevorzugt ist das Abzweigstück (14) 360° um dessen Längsachse (18) rotierbar mit dem Grundkörper (4) verbunden, wobei die Verbindung zwischen dem Abzweigstück (14) und dem Grundkörper (4) von einer umlaufenden Nut (20) am Ausgang (8) und einer komplementär ausgebildeten Feder (22) am Abzweigstück (14) gebildet sein kann.

## Beschreibung

Die Erfindung betrifft einen Flüssigkeitsverteiler mit einer Einströmöffnung und wenigstens zwei Ausströmöffnungen.

Derartige Flüssigkeitsverteiler sind z.B. in Bewässerungssystemen für Gartenanlagen in Form von T-Stücken oder Kreuzstücken als Verbindungs- und Verzweigungselemente zwischen Schläuchen oder Rohrleitungen bekannt. Durch die Einströmöffnung des Flüssigkeitsverteilers eindringendes Wasser wird auf zwei bzw. drei Ausströmöffnungen verteilt, die sämtlich in der gleichen Ebene wie die Einströmöffnung liegen. Dabei besteht ein großes Interesse, daß das Bewässerungssystem und insbesondere die integrierten Flüssigkeitsverteiler möglichst an die jeweiligen Gegebenheiten in unterschiedlichen Gärten angepaßt werden können.

Die Erfindung befaßt sich mit der Aufgabe, einen Flüssigkeitsverteiler der eingangs genannten Art mit hoher Variabilität bereitzustellen.

Die Erfindung löst diese Aufgabe durch einen Flüssigkeitsverteiler mit den Merkmalen des Anspruchs 1 sowie durch ein Flüssigkeitsverteiler-Set mit den Merkmalen des Anspruchs 14.

Der Flüssigkeitsverteiler weist einen Grundkörper mit einem Eingang und wenigstens einem ersten und einem zweiten Ausgang auf. Zumindest einer der Ausgänge ist mit einem Abzweigstück verbunden. Dadurch, daß das Abzweigstück eine der Ausströmöffnungen aufweist und zudem die Lage des Abzweigstücks zum Grundkörper bzw. zum Eingang und den Ausgängen des Grundkörpers veränderbar ist, ist die Variabilität des Flüssigkeitsverteilers erheblich verbessert.

In einer bevorzugten Ausgestaltung der Erfindung ist das Abzweigstück lösbar mit dem Grundkörper verbunden. Die Lage des Abzweigstücks zum Grundkörper kann somit durch Abnehmen des Abzweigstücks vom Grundkörper verändert werden. Der bei abgenommenem Abzweigstück freigewordene Ausgang kann mit einem anderen als dem abgenommenen Abzweigstück verbunden werden. Dieses andere Abzweigstück kann sich von dem ersten Abzweigstück z.B. durch einen anderen Durchmesser der Ausströmöffnung unterscheiden. Besonders bevorzugte Durchmesser der Ausströmöffnungen sind dabei 1", ¾ "und ½". Statt mit einem weiteren Abzweigstück kann der freigewordene Ausgang zweckmäßigerweise auch mit einem Verschlußelement, bevorzugt weitgehend wasserdicht, verschlossen werden.

Der Flüssigkeitsverteiler ist damit an unterschiedliche Gegebenheiten in jeweils individuell gestalteten Gärten anpaßbar. Beliebig viele Ausgänge des Grundkörpers des Flüssigkeitsverteilers können entweder mit Verschlußelementen verschlossen werden oder aber mit Abzweigstücken mit im Querschnitt gleich oder unterschiedlich großen Ausströmöffnungen belegt werden.

Ein weiterer Vorteil der Lösbarkeit der Abzweigstücke von dem Grundkörper liegt darin, daß der Flüssigkeitsverteiler zunächst nur mit genau der Anzahl an Abzweigstücken bzw. Ausströmöffnungen eingesetzt wird, die auch tatsächlich benötigt wird. Alle nicht benötigten Ausgänge des Grundkörpers können zunächst mit Verschlußelementen verschlossen werden. Sobald weitere Abzweigstücke bzw. Ausströmöffnungen an dem Flüssigkeitsverteiler benötigt werden, können jederzeit Verschlußelemente durch neue Abzweigstücke ausgetauscht werden. Der Flüssigkeitsverteiler ist somit in einfacher Weise erweiterbar. Es ist nicht erforderlich einen komplett neuen Flüssigkeitsverteiler einzusetzen.

In einer vorteilhaften Ausgestaltung der Erfindung ist das Abzweigstück um dessen Längsachse, insbesondere um 360°, rotierbar mit dem Grundkörper verbunden. Durch diese Veränderung der Lage des Abzweigstücks zum Grundkörper kann die Lage der Ausströmöffnung zum Flüssigkeitsverteiler bzw. zum Bewässerungssystem verändert und an die individuell vorliegenden Gegebenheiten angepaßt werden.

Weitere vorteilhafte Einzelheiten und Ausgestaltungen der Erfindung ergeben sich aus den Unteransprüchen und den nachfolgend beschriebenen, schematisch dargestellten Ausführungsbeispielen der Erfindung. In den Ansprüchen und in der Beschreibung aufgeführte Merkmale und Ausgestaltungen der einzelnen Elemente des Flüssigkeitsverteilers können, sofern es mehrere gleich bezeichnete dieser Elemente gibt, jeweils alle identisch bezeichnete Elemente aufweisen oder auch nur einzelne. Es zeigen:
- Fig. 1: einen erfindungsgemäßen Flüssigkeitsverteiler mit drei Ausgängen, von denen zwei mit Abzweigstücken und einer mit einem Verschlußelement verbunden bzw. verschlossen sind,
- Fig. 2: den Gegenstand aus Fig. 1, bei dem jedoch sämtliche Ausgänge mit Abzweigstücken verbunden sind,
- Fig. 3: den Gegenstand aus Fig. 1 und Fig. 2 mit abgenommenem Verschlußelement bzw. Abzweigstück und
- Fig. 4: den Gegenstand aus Fig. 2 in teilweise geschnittener Darstellung.

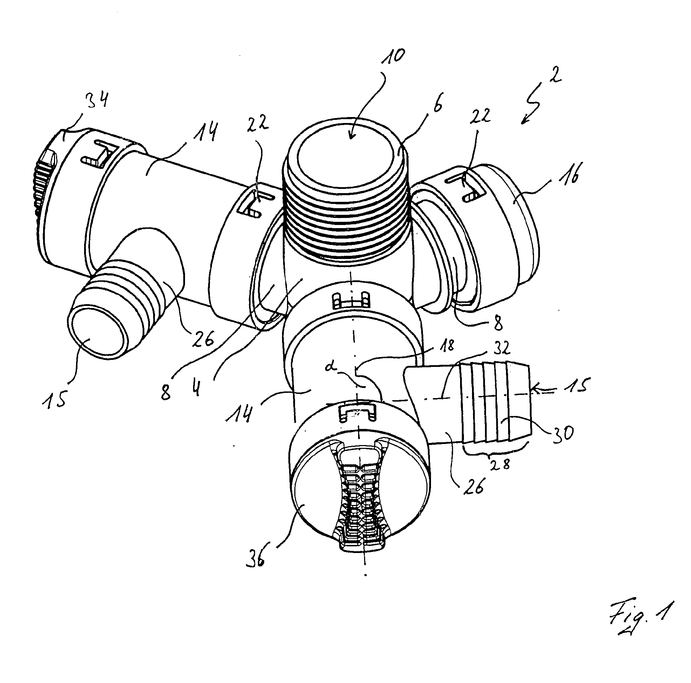

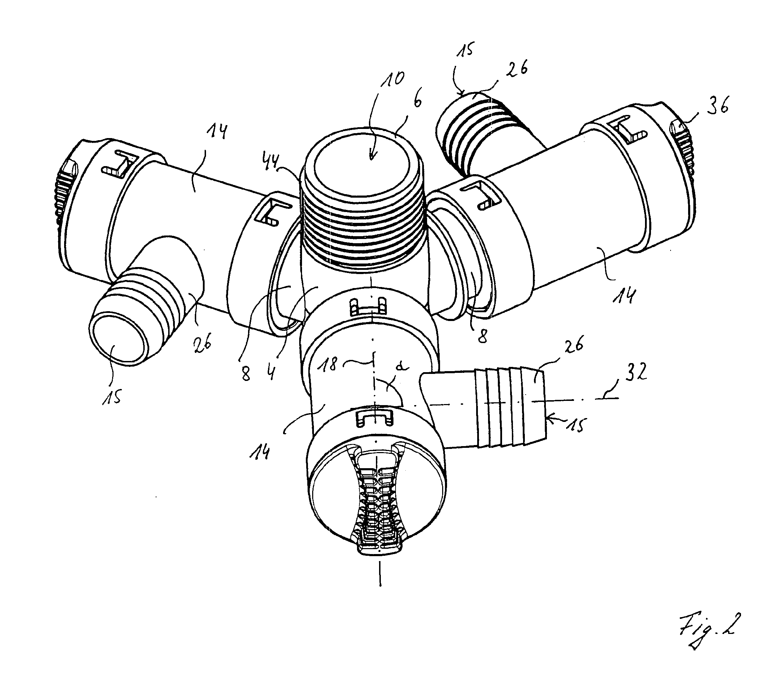

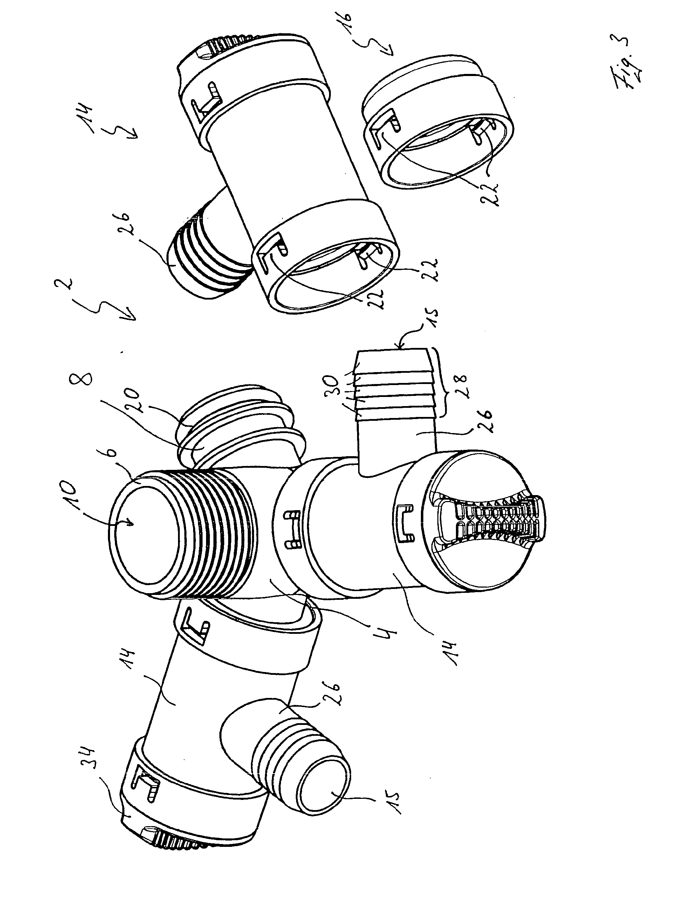

Die Figuren 1 bis 4 zeigen insgesamt einen erfindungsgemäßen Flüssigkeitsverteiler 2 in dreidimensionaler Darstellung. Im folgenden werden funktional gleiche Elemente des Flüssigkeitsverteilers, die mehrfach vorkommen, identisch beziffert. Der Flüssigkeitsverteiler 2 weist einen Grundkörper 4 mit einem Eingang 6 und drei in einer Ebene angeordnete und um 120° versetzte Ausgänge 8 auf. Der Eingang 6 schließt mit einer Einströmöffnung 10 ab, durch die Wasser in den Verteiler 2 einströmt und auf die Ausgänge 8 verteilt wird.

Zwei der drei Ausgänge 8 in Fig. 1 sind mit Abzweigstücken 14 verbunden, die jeweils Ausströmöffnungen 15 aufweisen. Der dritte Ausgang 8 ist mit einem Verschlußelement 16 wasserdicht verschlossen. Die Abzweigstücke 14 und auch das Verschlußelement 16 sind von den Ausgängen 8 lösbar, d.h. abnehmbar. Da die Ausgänge 8 identisch ausgebildet sind, können die Abzweigstücke 14 und das Verschlußelement 16 beliebig untereinander ausgetauscht werden.

Die Abzweigstücke 14 sind um deren Längsachsen 18 um 360° rotierbar mit dem Grundkörper 4 verbunden. Die Verbindung zwischen den Abzweigstücken 14 und dem Grundkörper 4 wird jeweils von einer umlaufenden Nut 20 an den Ausgängen 8 und zu diesen Nuten 20 komplementär ausgebildeten Federn 22 an den Abzweigstücken 14 gebildet. In gleicher Weise weist auch das Verschlußelement 16 eine komplementär ausgebildete Feder 22 auf, mit deren Hilfe das Verschlußelement 16 an dem Ausgang 8 fixiert werden kann. Die Verbindung zwischen den Abzweigstükken 14 bzw. dem Verschlußelement 16 und dem Grundkörper 4 kann jedoch auch durch ein separates Verbindungselement gebildet werden. Diese Ausgestaltung ist in den Zeichnungen jedoch nicht dargestellt.

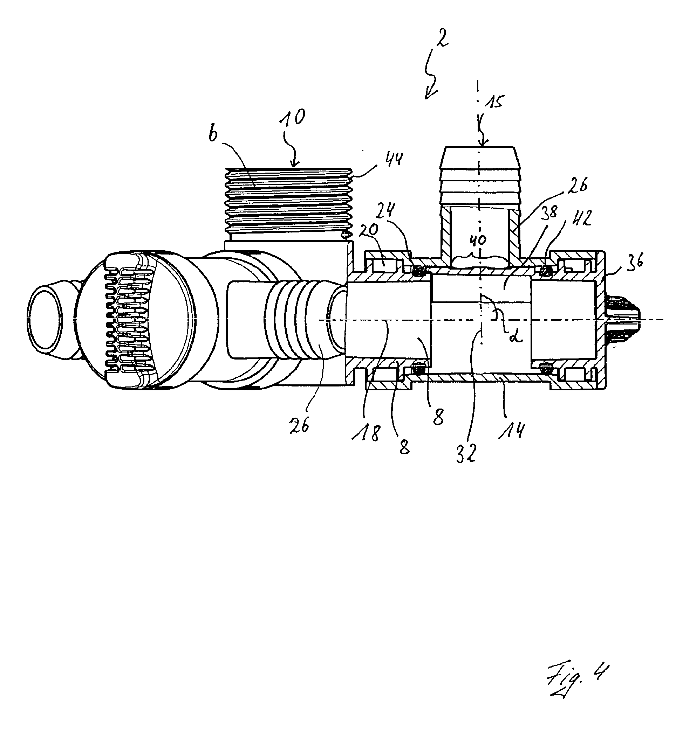

Zwischen den Ausgängen 8 und den Abzweigstücken 14 bzw. dem Verschlußelement 16 sind Dichtungen 24, insbesondere Dichtungsringe, angeordnet, deren Lage in Fig. 4 für eine der Dichtungen 24 dargestellt ist.

Die Abzweigstücke 14 weisen jeweils einen Abgangsstutzen 26 auf, der mit jeweils einer Ausströmöffnung 15 abschließt. Die Einströmöffnung 10 und die Ausströmöffnungen 15 sind über das hohle Innere des Grundkörpers 4 für die Flüssigkeitsverteilung miteinander verbunden.

Die Abgangsstutzen 26 weisen jeweils einen Anschlußbereich 28 für eine Schlauch-und/oder Rohrverbindung auf, die aus mehreren sich konkav zur Ausströmöffnung 15 hin verjüngenden Teilsegmenten 30 besteht. Hierdurch wird ein ungewolltes Abrutschen der Schlauchverbindung von den Abgangsstutzen 26 verhindert.

Die Längsachsen 32 der Abgangsstutzen 26 bilden einen Winkel α mit den jeweiligen Längsachsen 18 der Abzweigstücke 14. Der Winkel α beträgt in dem Ausführungsbeispiel jeweils 90°. Der Winkel α kann aber auch eine andere Größe aufweisen, beispielsweise 30°, 45°, 60°, 75° oder auch 105°, 120°, 135 °, 150° betragen, wobei der Abgangsstutzen 26 eines Abzweigstücks 14 einen anderen Winkel α haben kann als die Abgangsstutzen 26 der anderen Abzweigstücke 14. Diese Ausgestaltung ist in den Ausführungsbeispielen jedoch nicht dargestellt. Durch die rotierbare Verbindung der Abzweigstücke 14 mit dem Grundkörper 4 bzw. den Ausgängen 8 sind auch die Abgangsstutzen 26 um 360° um die jeweiligen Längsachsen 18 der Abzweigstücke 14 rotierbar. Die Variabilität des Flüssigkeitsverteilers 2 ist hierdurch deutlich erhöht, da die Richtungen der von dem Flüssigkeitsverteiler 2 abgehenden und mit diesem verbundenen Schlauchverbindungen freier wählbar sind.

Die Abzweigstücke 14 weisen jeweils ein Regulierventil 34 auf. Selbstverständlich können jedoch auch nur einzelne Abzweigstücke 14 ein Regulierventil 34 aufweisen. Die Regulierventile 34 dienen der Steuerung der durch die Ausströmöffnungen 15 jeweils austretenden Flüssigkeitsmenge. Das Regulierventil 34 ist in einer Schnittdarstellung in Fig. 4 dargestellt. Es weist ein Drehelement 36 und ein damit verbundenes im wesentlichen halbschalenförmiges Abdeckelement 38 auf. Durch Drehung des Drehelementes 36 ist das Abdeckelement 38 vor eine Öffnung 40 des Abzweigstücks 14 zum Abgangsstutzen 26 verschwenkbar. Mit Hilfe des Abdeckelements 38 kann die Öffnung 40 vollständig oder auch nur teilweise abgedeckt werden. Zwischen dem Abzweigstück 14 und dem Regulierventil 34 ist eine ringförmige Dichtung 42 angebracht, die ein unerwünschtes Entweichen von Flüssigkeit aus dem Abzweigstück 14 im Bereich des Drehelements 36 verhindert.

Der Eingang 6 des Grundkörpers 4 weist ein Anschlußgewinde 44 auf. Hierdurch ist eine feste Verbindung mit einer Flüssigkeitszuleitung möglich.

## Patentansprüche

1. Flüssigkeitsverteiler mit einer Einströmöffnung (10) und wenigstens zwei Ausströmöffnungen (15), **gekennzeichnet durch** einen Grundkörper (4) mit einem Eingang (6) und wenigstens einem ersten und einem zweiten Ausgang (8), wobei wenigstens einer der Ausgänge (8) mit einem eine veränderbare Lage zum Grundkörper (4) einnehmenden Abzweigstück (14) verbunden ist und das Abzweigstück (14) eine der Ausströmöffnungen (15) aufweist.

2. Flüssigkeitsverteiler nach Anspruch 1, **dadurch gekennzeichnet, daß** das Abzweigstück (14) lösbar mit dem Grundkörper (4) verbunden ist.

3. Flüssigkeitsverteiler nach Anspruch 2, **dadurch gekennzeichnet, daß** der Ausgang (8) bei abgenommenem Abzweigstück (14) mit einem Verschlußelement (16) verschließbar ist.

4. Flüssigkeitsverteiler nach einem der vorhergehenden Ansprüche, **dadurch gekennzeichnet, daß** das Abzweigstück (14) um dessen Längsachse (18) rotierbar mit dem Grundkörper (4) verbunden ist.

5. Flüssigkeitsverteiler nach Anspruch 4, **dadurch gekennzeichnet, daß** das Abzweigstück (14) 360° um dessen Längsachse (18) rotierbar mit dem Grundkörper (4) verbunden ist.

6. Flüssigkeitsverteiler nach einem der vorhergehenden Ansprüche, **dadurch gekennzeichnet, daß** die Verbindung zwischen dem Abzweigstück (14) und dem Grundkörper (4) von einer umlaufenden Nut (20) am Ausgang (8) und einer komplementär ausgebildeten Feder (22) am Abzweigstück (14) gebildet ist.

7. Flüssigkeitsverteiler nach einem der vorhergehenden Ansprüche, **dadurch gekennzeichnet, daß** das Abzweigstück (14) einen Abgangsstutzen (26) aufweist.

8. Flüssigkeitsverteiler nach Anspruch 7, **dadurch gekennzeichnet, daß** die Längsachse (32) des Abgangsstutzens (26) einen Winkel α mit der Längsachse (18) des Abzweigstücks (14) bildet.

9. Flüssigkeitsverteiler nach einem der vorhergehenden Ansprüche, **dadurch gekennzeichnet, daß** das Abzweigstück (14) ein Regulierventil (34) zur Steuerung der durch die Ausströmöffnung (15) austretenden Flüssigkeitsmenge aufweist.

10. Flüssigkeitsverteiler nach Anspruch 9, **dadurch gekennzeichnet, daß** das Regulierventil (34) ein Drehelement (36) und ein damit verbundenes Abdeckelement (38) aufweist und das Abdeckelement (38) vor eine Öffnung (40) des Abzweigstücks (14) zum Abgangsstutzen (26) verschwenkbar ausgebildet ist.

11. Flüssigkeitsverteiler nach einem der vorhergehenden Ansprüche, **dadurch gekennzeichnet, daß** der Eingang (6) des Grundkörpers (4) mit der Einströmöffnung (10) abschließt.

12. Flüssigkeitsverteiler nach einem der vorhergehenden Ansprüche, **dadurch gekennzeichnet, daß** der Eingang (6) ein Anschlußgewinde (44) aufweist.

13. Flüssigkeitsverteiler nach einem der vorhergehenden Ansprüche, **dadurch gekennzeichnet, daß** der Grundkörper (4) drei in einer Ebene angeordnete und um 120° versetzte Ausgänge (8) aufweist.

14. Flüssigkeitsverteiler-Set mit einem Flüssigkeitsverteiler (2) nach einem der vorstehenden Ansprüche, mit einem Verschlußelement (16) zum Verschließen eines der Ausgänge (8) und mit Abzweigelementen (14) für jeden der verbleibenden Ausgänge (8) des Grundkörpers (4).
